# EUROPEAN PATENT APPLICATION

(11) **EP 1 655 932 A2**
(43) Date of publication of application: **10.05.2006**
(21) Application number: 05024415.1
(22) Date of filing: 09.11.2005
(51) Int. Cl.: H04M 1/725

(54) **Portable cellular phone, portable cellular phone system, message format controlling method and message format controlling program**

(30) Priority: 09.11.2004 JP 2004325576
(71) Applicant: NEC CORPORATION, Tokyo (JP)
(72) Inventor: Ara, Youjirou, Minato-ku, Tokyo (JP)
(74) Representative: Vossius & Partner

(57) **Abstract**

A portable cellular phone (10) is provided which is capable of transmitting a message corresponding to a terminal of a message receiver even in a case where any one or some of terminals of message receivers have a function of receiving a message of a MMS (Multimedia Message Service) format and any one or some of the terminals do not have the function. Terminal information indicating whether or not a message of the MMS format can be received is managed by a terminal information server (20). A telephone number or E-mail address (15b) and terminal type information (15c) corresponding to a name (15a) of the message receiver is stored by the portable cellular phone (10) and terminal information is received via the Internet and updated periodically. Terminal type information (15c) corresponding to a name (15a) of the message receiver is read and a message of either of the SMS (Short Message Service) or MMS format is selected to create a message for transmission.

## Description

The present invention relates to a portable cellular phone, a portable cellular phone system, a message format controlling method, and a message format controlling program, and particularly to the portable cellular phone, the portable cellular phone system, the message format controlling method, and the message format controlling program, each being suitably used in a case where any one or some of terminals of message receivers have a function of receiving a message of an MMS (Multimedia Message Service) format and any one or some of the terminals do not have the function.

Portable cellular phones adopting a GSM (Global System for Mobile communications) are of two models, one having a high function of transmitting and receiving a message of both an SMS (Short Message Service) format and an MMS (Multimedia Message Service) format and another having a low-cost function of transmitting and receiving only a message of the SMS. In the case of transmission or receipt of a message of the SMS format, a portable cellular phone, as a single unit, transmits or receives a short character message by not using a speech channel but a control channel. In the case of transmission or receipt of a message of the MMS format, the portable cellular phone transmits or receives not only voice but also messages of different formats such as a text, still image, moving image or a like.

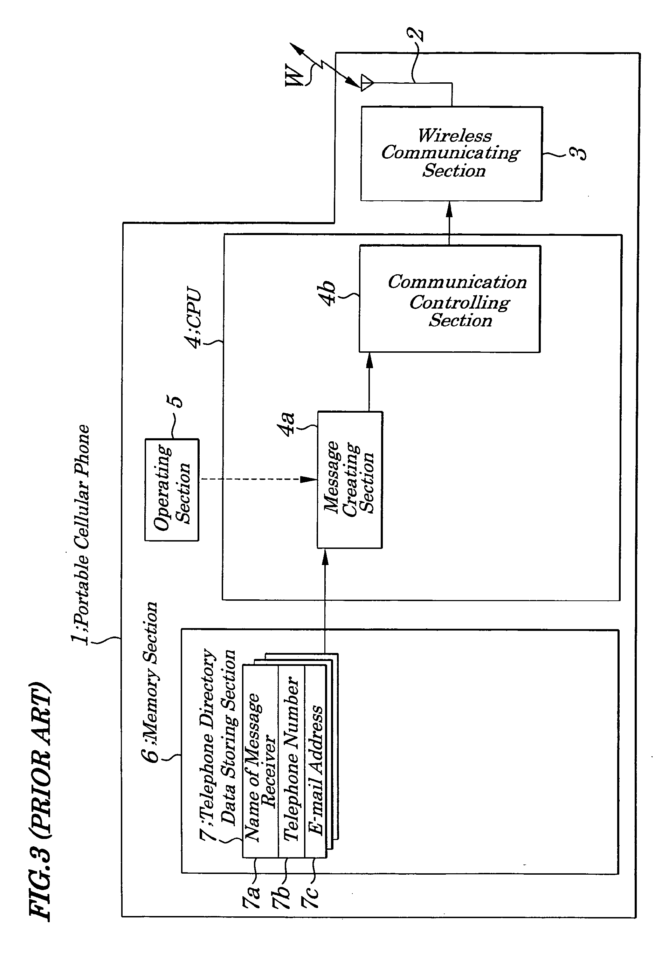

The above-described model of portable cellular phone has such conventional configurations as shown, for example, in Fig. 3. As shown in Fig. 3, a portable cellular phone 1 includes an antenna 2, a wireless communicating section 3, a CPU (Central Processing Unit) 4, an operating section 5, and a memory section 6. The wireless communicating section 3 transmits or receives a wireless wave W to and from a wireless base station (not shown) via the antenna 2. The operating section 5 has, for example, a transmitting key, an alphabetical character / kana / kanji / numerical character converting key, a power ON/OFF key, cursor keys to perform a cursor operation, a terminating key (all not shown), or a like. A user controls the operating section 5 and performs, for example, an operation to create a message for transmission and an operation to display a name of a message receiver on a displaying section (not shown). A message for transmission is of the SMS format or of the MMS format depending upon contents of the message to be transmitted.

The memory section 6 is made up of, for example, a RAM (Random Access Memory) or a like and has a telephone directory data storing section 7. The telephone directory data storing section 7 stores names 7a of message receivers and telephone numbers 7b and E-mail addresses 7c of a terminal of the message receiver. The CPU 4 has a message creating section 4a and a communication controlling section 4b. The message creating section 4a, when an operation of creating a message is performed by the operating section 5, creates a message corresponding to the operation performed by the user. The communication controlling section 4b transmits a message to a telephone number or an E-mail address corresponding to a name of a message receiver via the wireless communicating section 3 and the antenna 2.

Conventional technology of this kind, besides the above portable cellular phone, is disclosed in, for example, following references.

A message distributing device is disclosed in JP-A- 2004-165756 in which destination information of a communication terminal, a type of the terminal and a protocol of a message corresponding to the type of the terminal are stored in every communication terminal and, when destination information containing a message is detected, a protocol corresponding to a terminal type for the destination information is read and the message for transmission is converted into a message contained in the destination information based on the protocol and the converted message is distributed to a communication terminal corresponding to the destination information. Therefore, distribution of messages among communication terminals each operating according to a different protocol can be achieved without mounting a protocol device for every model of communication terminal.

Moreover, a message transmitting method is disclosed in JP-A-2004-518385 in which, when an MMS message is to be transmitted from a first subscriber device belonging to an MMS-capable system being able to transmit or receive an MMS message to a second subscriber device not belonging to the MMS-capable system or being unable to receive an MMS message, the MMS message is converted according to a message transmitting format provided by the second subscriber device and the converted message is transmitted to the second subscriber device.

However, the above conventional portable cellular phone has following a problem. That is, the conventional portable cellular phone shown in Fig. 3 presents a problem in that, when a message for transmission is created, if a format of a message for which a terminal of a message receiver provides support is unknown and if the terminal of the message receiver provides support for only a message of the SMS format, the terminal of the message receiver is unable to receive the MMS message.

Moreover, a purpose of the message distributing device disclosed in JP-A-2004-165756 is to eliminate the need for mounting a protocol device for every model of communication terminal, which is, therefore, different from that of the present invention.

Furthermore, in the message transmitting device disclosed in JP-A-2004-518385, an MMS message is converted according to the message transmitting format provided by the second subscriber device and, therefore, configurations of the message transmitting device and its purpose are different from those of the present invention.

In view of the above, it is an object of the present invention to provide a portable cellular phone which is capable of transmitting a message that can correspond to a terminal of a message receiver in a case where any one or some of terminals of message receivers have a function of receiving a message of an MMS format and any one or some of the terminals do not have the function.

According to a first aspect of the present invention, there is provided a portable cellular phone so configured to store a name of a message receiver, and at least one of a telephone number and an E-mail address, and terminal type information corresponding to the name of the message receiver, and terminal information indicating a message format which each type of terminal can receive, out of a plurality of message formats, for each terminal type, and when a message for transmission to the message receiver is created, to read the terminal type information corresponding to the name of the message receiver, to select a message format which the terminal of the message receiver can receive, based on the terminal information corresponding to the read terminal type information of the message receiver, and to create a message in compliance with the selected message format.

In the foregoing first aspect, a preferable mode is one that wherein includes:
a telephone directory data storing unit to store the name of the message receiver, and at least one of the telephone number or the E-mail address of the terminal of the message receiver and the terminal type information corresponding to the name of the message receiver;
a terminal information storing unit to store the terminal information; and
a message creating unit to obtain, when the message for transmission is created, the terminal type information corresponding to the name of the message receiver from the telephone directory data storing unit and the terminal information corresponding to the obtained terminal type information from the terminal information storing unit, to select the message format which the terminal of the message receiver can receive, based on the obtained terminal information, and to create a message in compliance with the selected message format.

According to a second aspect of the present invention, there is provided a portable cellular phone so configured to store a name of a message receiver, and at least one of a telephone number and an E-mail address, and terminal type information corresponding to the name of the message receiver, and terminal information indicating whether or not each type of terminal can receive not only a message of an SMS (Small Message Service) format, but also a message of an MMS (Multimedia Message Service) format, for each terminal type, and when a message for transmission to the message receiver is created, to read the terminal type information corresponding to the name of the message receiver, to select the SMS format or the MMS format which the terminal of the message receiver can receive, based on the terminal information corresponding to the read terminal type information of the message receiver, and to create a message in compliance with the selected message format.

In the foregoing second aspect, a preferable mode is one that wherein includes:
a telephone directory data storing unit to store the name of the message receiver, and at least one of the telephone number or the E-mail address of the terminal of the message receiver and the terminal type information corresponding to the name of the message receiver;
a terminal information storing unit to store the terminal information; and
a message creating unit to obtain, when the message for transmission is created, the terminal type information corresponding to the name of the message receiver from the telephone directory data storing unit and the terminal information corresponding to the obtained terminal type information from the terminal information storing unit, to select the SMS format or the MMS format which the terminal of the message receiver can receive, based on the obtained terminal information, and to create a message in compliance with the selected message format.

According to a third aspect of the present invention, there is provided a portable cellular phone system including:
a terminal information server to manage terminal information indicating a message format which each type of terminal can receive, out of a plurality of message formats, for each terminal type, and to send out the terminal information to a communication line; and
a portable cellular phone so configured to store a name of a message receiver, and at least one of a telephone number and an E-mail address, and terminal type information corresponding to the name of the message receiver, to receive the terminal information from the terminal information server via the communication line, and to store the received terminal information,
and when a message for transmission to the message receiver is created, to read the terminal type information corresponding to the name of the message receiver, to select a message format which the terminal of the message receiver can receive, based on the terminal information corresponding to the read terminal type information of the message receiver, and to create a message in compliance with the selected message format.

In the foregoing third aspect, a preferable mode is one wherein the terminal information server manages the terminal information indicating whether or not each type of terminal can receive not only a message of an SMS (Small Message Service) format, but also a message of an MMS (Multimedia Message Service) format, for each terminal type and sends out the terminal information to the communication line, and
wherein the portable cellular phone is so configured to store the name of the message receiver, and at least one of the telephone number and the E-mail address, and the terminal type information corresponding to the name of the message receiver, to receive the terminal information from the terminal information server via the communication line, and to store the received terminal information, and when a message for transmission to the message receiver is created, to read the terminal type information corresponding to the name of the message receiver, to select the SMS format or the MMS format which the terminal of the message receiver can receive, based on the terminal information corresponding to the read terminal type information of the message receiver, and to create a message in compliance with the selected message format.

Also, a preferable mode is one wherein the terminal information server is so configured as to periodically send out the terminal information to the communication line and wherein the portable cellular phone is so configured as to receive the terminal information from the terminal information server via the communication line and to store the received information and to periodically update the received information.

Also, a preferable mode is one that wherein includes:
a telephone directory data storing unit to store the name of the message receiver, and at least one of the telephone number or the E-mail address of the terminal of the message receiver and the terminal type information corresponding to the name of the message receiver;
a terminal information storing unit which stores the terminal information fed from the terminal information server and periodically updates the terminal information; and
a message creating unit to obtain, when the message for transmission is created, the terminal type information corresponding to the name of the message receiver from the telephone directory data storing unit and the terminal information corresponding to the obtained terminal type information from the terminal information storing unit, to select the message format which the terminal of the message receiver can receive, based on the obtained terminal information, and to create a message in compliance with the selected message format.

According to a fourth aspect of the present invention, there is provided a message format controlling method including:
a step of making a terminal information server, on a communication line, manage terminal information indicating a message format which each type of terminal can receive, out of a plurality of message formats, for each terminal type, and send out the terminal information to the communication line; and
a step of making a portable cellular phone store a name of a message receiver, and at least one of a telephone number and an E-mail address, and terminal type information corresponding to the name of the message receiver, receive the terminal information from the terminal information server via the communication line, and store the received terminal information, and when a message for transmission to the message receiver is created, read the terminal type information corresponding to the name of the message receiver, select a message format which the terminal of the message receiver can receive, based on the terminal information corresponding to the read terminal type information of the message receiver, and create a message in compliance with the selected message format.

In the foregoing fourth aspect, a preferable mode is one that wherein includes:
a step of making a terminal information server, on a communication line, manage the terminal information indicating whether or not each type of terminal can receive not only a message of an SMS (Small Message Service) format, but also a message of an MMS (Multimedia Message Service) format, for each terminal type and sends out the terminal information to the communication line, and
a step of making a portable cellular phone store the name of the message receiver, and at least one of the telephone number and the E-mail address, and the terminal type information corresponding to the name of the message receiver, receive the terminal information from the terminal information server via the communication line, and store the received terminal information, and when a message for transmission to the message receiver is created, read the terminal type information corresponding to the name of the message receiver, select the SMS format or the MMS format which the terminal of the message receiver can receive, based on the terminal information corresponding to the read terminal type information of the message receiver, and create a message in compliance with the selected message format.

Also, a preferable mode is one that wherein includes:
a step of making the terminal information server send out periodically the terminal information to the communication line; and
a step of making the portable cellular phone receive the terminal information from the terminal information server via the communication line and store the received information and periodically update the received information.

Also, a preferable mode is one that wherein includes:
a step of making the portable cellular phone perform telephone directory data storing processing in which the name of the message receiver, and at least one of the telephone number or the E-mail address of the terminal of the message receiver and the terminal type information corresponding to the name of the message receiver are stored;
a step of making the portable cellular phone perform terminal information processing in which the terminal information fed from the terminal information server is stored and periodically updated;
a step of making the portable cellular phone perform message selecting processing in which, when the message for transmission is created, the terminal type information corresponding to the name of the message receiver is obtained from the telephone directory data storing unit, and the terminal information corresponding to the obtained terminal type information is obtained from the terminal information storing unit, and the message format which the terminal of the message receiver can receive, is selected based on the obtained terminal information; and
a step of making the portable cellular phone perform message creating processing in which the message is created based on a result from the selecting processing.

According to a fifth aspect of the present invention, there is provided a message format controlling program to make a computer in the portable cellular phone as described above, implement processing to store a name of a message receiver, and at least one of a telephone number and an E-mail address, and terminal type information corresponding to the name of the message receiver, to receive the terminal information from the terminal information server via the communication line, and processing to store the received terminal information, and when a message for transmission to the message receiver is created, processing to read the terminal type information corresponding to the name of the message receiver, processing to select a message format which the terminal of the message receiver can receive, based on the terminal information corresponding to the read terminal type information of the message receiver, and processing to create a message in compliance with the selected message format.

With the above configuration, the portable cellular phone stores a telephone number or E-mail address of a terminal and terminal type information corresponding to a name of a message receiver, terminal information indicating, for each terminal type, a message format, out of a plurality of message formats, that can be received by the terminal of the message receiver and reads, when a message for transmission is created, the terminal type information corresponding to a name of the message receiver and selects a message format that can be received by the message receiver based on terminal information corresponding to the read terminal type information and, therefore, even in a case where any one or some of terminals of message receivers have a function of receiving a message of a format and any one or some of the terminals do not have the function, a message corresponding suitably to the terminal of the message receiver can be transmitted, thus making it possible to prevent a message that the terminal of the message receiver cannot receive from being delivered.

Moreover, terminal information showing, for each terminal type, a message format, out of a plurality of message formats, that can be received by a terminal of the message receiver is managed by the terminal information server and the terminal information is sent out to a communication line and a telephone number or E-mail address and terminal type information of a message receiver is stored and terminal information is received from the terminal server via the communication line and is then stored by the portable cellular phone. When a message for transmission is created, terminal type information corresponding to a name of the message receiver is read to select a message format that can be received by the message receiver based on terminal information corresponding to the terminal type information for the creation of the message. Therefore, even in a case where any one or some of terminals of message receivers have a function of receiving a message of a format and any one or some of the terminals do not have the function, a message corresponding suitably to the terminal of the message receiver can be transmitted, thus making it possible to prevent a message that the terminal of the message receiver cannot receive from being delivered.

Furthermore, terminal information is periodically sent out by the terminal information server to a communication line and terminal information from the terminal information server is periodically updated and, therefore, updated terminal information is stored in the portable cellular phone and exact selection of the message format can be achieved by the present invention.

The above and other objects, advantages, and features of the present invention will be more apparent from the following description taken in conjunction with the accompanying drawings in which:
Fig. 1 is a block diagram showing electrical configurations of main components of a portable cellular phone according to an embodiment of the present invention;
Fig. 2 is a flowchart explaining operations of the portable cellular phone shown in Fig. 1; and
Fig. 3 is a diagram showing electrical configurations of main components of a conventional portable cellular phone.

Best modes of carrying out the present invention will be described in further detail using various embodiments with reference to the accompanying drawings.

A portable cellular phone of the present invention is so configured that, in a case where any one or some of terminals of message receivers have a function of receiving a message of an MMS (Multimedia Message Service) format and any one or some of the terminals do not have the function, by obtaining terminal information indicating whether or not a message of the MMS format can be received for every kind of terminal and by selecting either of a message of an SMS (Short Message Service) format or the MMS format based on the obtained terminal information, a message is created.

### Embodiment

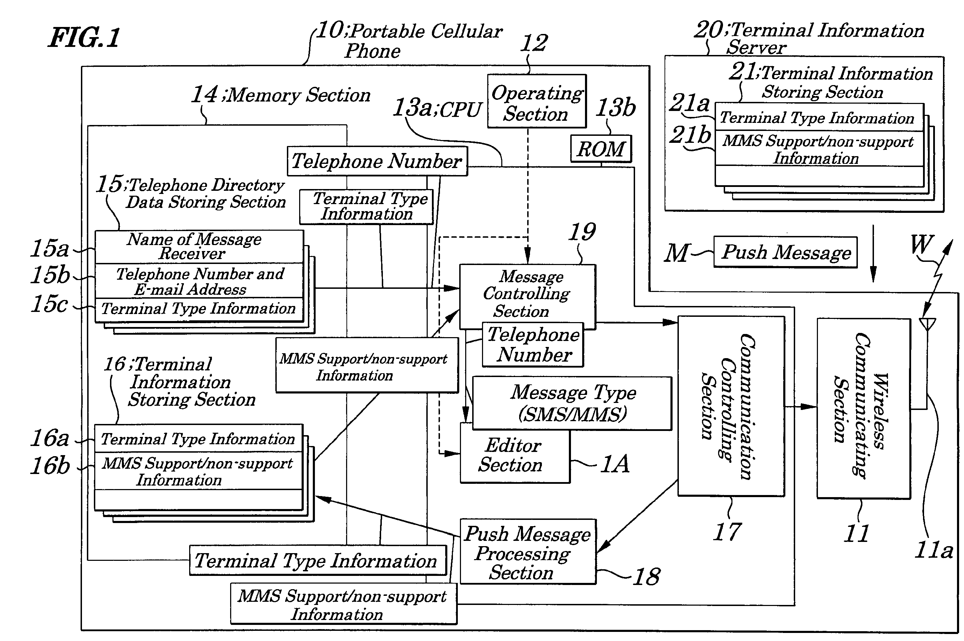

Figure 1 is a block diagram showing electrical configurations of main components of a portable cellular phone system of an embodiment of the present invention.

The portable cellular phone system of the embodiment includes a portable cellular phone 10 and a terminal information server 20. The portable cellular phone 10 is made up of a wireless communicating section 11, an antenna 11a, an operating section 12, a CPU (Central Processing Unit) 13a, a ROM (Read Only Memory) 13b, and a memory section 14. The wireless communicating section 11 transmits or receives a wireless wave W between the portable cellular phone 10 and a wireless base station (not shown) via the antenna 11a. The wireless base station is connected to an ordinary telephone line via a visitor mobile-services switching center (not shown) and a gateway mobile-services switching center (not shown).

The operating section 12 has, for example, a transmitting key, an alphabetical character / kana / kanji / numerical character converting key, a power ON/OFF key, cursor keys to perform a cursor operation, a terminating key, or a like. A user controls the operating section 12 and performs an operation to create a message for transmission and to display a name of a message receiver on a displaying section (not shown). The memory section 14 is made up of, for example, a RAM or a like and has a telephone directory data storing section 15 and a terminal information storing section 16. The telephone directory data storing section 15 stores a name 15a of a message receiver, a telephone number and/or E-mail address 15b and terminal type information 15c of a terminal of the message receiver. The terminal type information 15c indicates a type, model or classification of a terminal corresponding to a name 15a of a message receiver, which is stored according to an operation of the user, together with a telephone number and/or E-mail address 15b of a terminal of the message receiver. The terminal information storing section 16 stores terminal type information 16a fed from the terminal information server 20 and an MMS support/non-support information 16b which are periodically updated.

The CPU 13a controls the entire portable cellular phone 10 and, in the embodiment in particular, includes a communication controlling section 17, a Push message processing section 18, a message controlling section 19, and an editor section 1A. The communication controlling section 17 receives a Push message M fed from the terminal information server 20 via the antenna 11a and wireless communicating section 11 and transmits a message for transmission to the telephone number or E-mail address of the terminal of a message receiver corresponding to the name of the message receiver via the wireless communicating section 11 and antenna 11a. The Push message processing section 18 transmits the Push message M received by the communication controlling section 17 to the terminal information storing section 16.

The message controlling section 19, when the operating section 12 performs an operation to create a message for transmission, obtains the telephone number or the E-mail address 15b of a terminal of the message receiver corresponding to the name 15a of the message receiver from the telephone directory data storing section 15 and also terminal information corresponding to the terminal type information 15c from the terminal information storing section 16 and selects a message of either of an SMS (Short Message Service) format or an MMS (Multimedia Message Service) format that the terminal of the message receiver can receive, based on the obtained terminal information, to create a message and transmits the created message to the communication controlling section 17. In the embodiment in particular, the message controlling section 19, if the terminal of the message receiver provides support for transmitting and receiving of the message of the MMS format, drives the editor section 1A so that a message of the MMS format is created and, if the terminal of the message receiver provides no support for transmitting and receiving of the message of the MMS format, drives the editor section 1A so that the message of the SMS format is created. The editor section 1A edits the message of the MMS or SMS format based on the control by the message controlling section 19. The ROM 13b stores the message format controlling program to make the CPU 13a operate.

The terminal information server 20 is connected to, for example, to the Internet (communication line) and has a terminal information storing section 21. Each entry of the terminal information storing section 21 contains terminal type information 21a and MMS support/non-support information 21b. The terminal type information 21a, when each terminal is released, is transmitted from, for example, a distributor, sale office, or a like of the terminal via the Internet together with the MMS support/non-support information 21b for each terminal type and is registered. The MMS support/non-support information 21b indicates whether or not the message of the MMS format, out of messages of the SMS and MMS formats, can be received by the terminal of the message receiver. The terminal information server 20 periodically transmits terminal type information 21a and MMS support/non-support information 21b, as the Push message M, to the portable cellular phone 10 via the Internet.

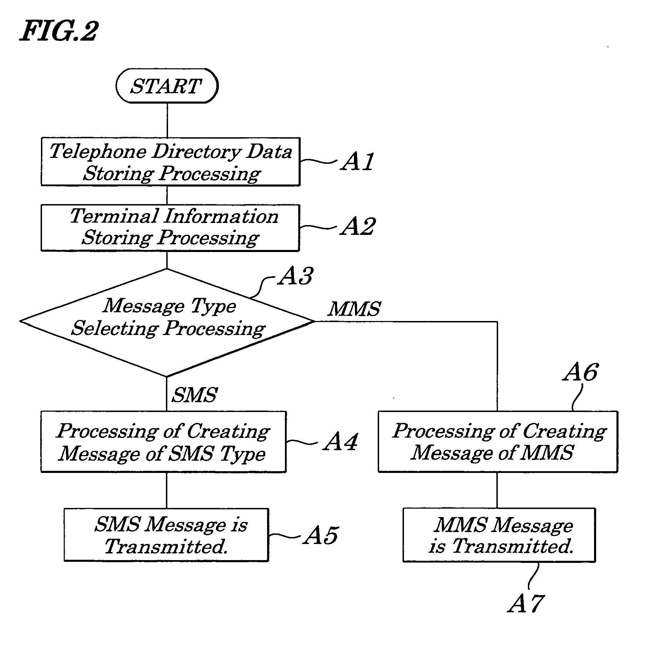

Figure 2 is a flowchart explaining operations of the portable cellular phone 10 shown in Fig. 1. By referring to Fig. 1, processing contents in a message format controlling method adopted by the portable cellular phone system of the embodiment are described.

In the portable cellular phone system, the terminal information server 20 is connected on the Internet (communication line) and manages terminal information indicating, for each terminal type, whether or not the message of the MMS format, out of messages of the SMS and MMS formats, can be received by the terminal of the message receiver and periodically transmits the terminal information, as a Push message M, to the Internet. The telephone number and/or the E-mail address 15b of the terminal of the message receiver and the terminal type information 15c of the message receiver corresponding to the name 15a of the message receiver are stored by the portable cellular phone 10 and terminal information is received from the terminal information server 20 via the Internet and is stored and periodically updated. When a message for transmission is created, terminal type information 15c corresponding to the name 15a of the message receiver is read and the message of the SMS format or MMS format is selected based on the terminal information corresponding to the read terminal type information 15c to create the message.

That is, as shown in Fig. 2, by operations of the user, the telephone number and/or the E-mail address 15b of the terminal of the message receiver and the terminal type information 15c corresponding to the name 15a of the message receiver are stored in the telephone directory data storing section 15 (Step A1, telephone directory data storing processing). Terminal information is delivered, as the Push message M, from the terminal information server 20 and is stored in the terminal information storing section 16 and is periodically updated (Step A2, terminal information storing processing) . On the other hand, when the user controls the operating section 12 and performs an operation to create a message for transmission, the name 15a of the message receiver stored in the step of the telephone directory data storing processing is searched for and, if the name 15a of the message receiver has been already stored, the terminal type information 15c corresponding to the name 15a is obtained by the message controlling section 19 and the terminal information corresponding to the terminal type information 15c is obtained from the terminal information stored in the terminal information storing section 16 in the step of the terminal information storing processing (Step A2) and the message of either of the SMS format or MMS format that the terminal of the message receiver can receive is selected based on the terminal information (Step A3, message format selecting processing).

At this time point, the message controlling section 19, if the terminal of the message receiver provides support for transmitting and receiving of the message of the MMS format, drives the editor section 1A, based on the MMS support/non-support information 16b, so that the message of the MMS format is created and, if the terminal of the message receiver provides no support for transmitting and receiving of the message of the MMS format, drives the editor section 1A so that the message of the SMS format is created. If the terminal of the message receiver provides no support for transmitting or receiving the message of the MMS format, the message of the SMS format is created (Step A4) and the SMS message is transmitted (Step A5). Moreover, if the terminal of the message receiver provides support for transmitting or receiving the message of the MMS format, the message of the MMS format is created (Step A6) and the MMS message is transmitted (Step A7).

As described above, according to the above embodiment, terminal information indicating, for each terminal type, whether or not the message of the MMS format, out of messages of the SMS and MMS formats, can be received by the terminal of the message receiver is managed by the terminal information server 20 and the terminal information is periodically transmitted as the Push message M. The telephone number and/or the E-mail address 15b of the terminal of the message receiver and the terminal type information 15c corresponding to the name 15a of the message receiver are stored by the portable cellular phone 10 and terminal information is then received from the terminal information server 20 via the Internet and is stored and periodically updated by the portable cellular phone 10. When the message for transmission is created, the terminal type information 15c corresponding to the name 15a of the message receiver is read and the message of either of the SMS format or the MMS format is selected based on the terminal information corresponding to the read terminal type information 15c. Therefore, even in a case where any one or some of terminals of message receivers have a function of receiving the message of the MMS format and any one or some of the terminals do not have the function, a message corresponding to the terminal of the message receiver is transmitted and, as a result, it is made possible to prevent the message that the message receiver cannot receive from being created and transmitted. Moreover, terminal information is periodically transmitted by the terminal information server 20 via the Internet and the terminal information fed from the terminal information server 20 is periodically updated and, as a result, the terminal information is always updated by the portable cellular phone 10 and the newest terminal information is stored to select the correct message format.

It is apparent that the present invention is not limited to the above embodiments but may be changed and modified without departing from the scope of the invention. For example, order of the processing employed in the Step A1 and Step A2 in Fig. 2 may be reversed. The function of transmitting the Push message M in the terminal information server 20 may be omitted and, instead, the terminal information stored in the terminal information storing section 16 may be updated by gathering the information by the user's operation of making access to the terminal information server 20. In this case, though the terminal information to be stored in the terminal information storing section 16 is not updated periodically, approximately the same action or effect as obtained in the above embodiment can be achieved as well.

The present invention can be applied to general terminals (electronic communication device) having a function of the portable cellular phone such as a PDA (Personal Digital Assistant) or a like.

## Claims

1. A portable cellular phone (10) **characterized** so to store a name (15a) of a message receiver, and at least one of a telephone number and an E-mail address (15b), and terminal type information (15c) corresponding to the name (15a) of the message receiver, and terminal information indicating a message format which each type of terminal can receive, out of a plurality of message formats, for each terminal type, and when a message for transmission to the message receiver is created, to read the terminal type information (15c) corresponding to the name (15a) of the message receiver, to select a message format which the terminal of the message receiver can receive, based on the terminal information corresponding to the read terminal type information (15c) of the message receiver, and to create a message in compliance with the selected message format.

2. The portable cellular phone (10) according to Claim 1, **characterized by** comprising:
a telephone directory data storing unit (15) to store the name (15a) of the message receiver, and at least one of the telephone number or the E-mail address (15b) of the terminal of the message receiver and the terminal type information (15c) corresponding to the name (15a) of the message receiver;
a terminal information storing unit (16) to store the terminal information; and
a message creating unit (12, 13a, 13b) to obtain, when the message for transmission is created, the terminal type information (15c) corresponding to the name (15a) of the message receiver from said telephone directory data storing unit (15) and the terminal information corresponding to the obtained terminal type information (15c) from said terminal information storing unit (16), to select the message format which the terminal of the message receiver can receive, based on the obtained terminal information, and to create a message in compliance with the selected message format.

3. A portable cellular phone (10) **characterized** so to store a name (15a) of a message receiver, and at least one of a telephone number and an E-mail address (15b) , and terminal type information (15c) corresponding to the name (15a) of the message receiver, and terminal information indicating whether or not each type of terminal can receive not only a message of an SMS (Small Message Service) format, but also a message of an MMS (Multimedia Message Service) format, for each terminal type, and when a message for transmission to the message receiver is created, to read the terminal type information (15c) corresponding to the name (15a) of the message receiver, to select the SMS format or the MMS format which the terminal of the message receiver can receive, based on the terminal information corresponding to the read terminal type information (15c) of the message receiver, and to create a message in compliance with the selected message format.

4. The portable cellular phone (10) according to Claim 3, **characterized by** comprising:
a telephone directory data storing unit (15) to store the name (15a) of the message receiver, and at least one of the telephone number or the E-mail address (15b) of the terminal of the message receiver and the terminal type information (15c) corresponding to the name (15a) of the message receiver;
a terminal information storing unit (16) to store the terminal information; and
a message creating unit (12, 13a, 13b) to obtain, when the message for transmission is created, the terminal type information (15c) corresponding to the name (15a) of the message receiver from said telephone directory data storing unit (15) and the terminal information corresponding to the obtained terminal type information (15c) from said terminal information storing unit (16), to select the SMS format or the MMS format which the terminal of the message receiver can receive, based on the obtained terminal information, and to create a message in compliance with the selected message format.

5. A portable cellular phone (10) system **characterized by** comprising:
a terminal information server (20) to manage terminal information indicating a message format which each type of terminal can receive, out of a plurality of message formats, for each terminal type, and to send out the terminal information to a communication line; and
a portable cellular phone (10) so configured to store a name (15a) of a message receiver, and at least one of a telephone number and an E-mail address (15b) , and terminal type information (15c) corresponding to the name (15a) of the message receiver, to receive the terminal information from said terminal information server (20) via said communication line, and to store the received terminal information, and when a message for transmission to the message receiver is created, to read the terminal type information (15c) corresponding to the name (15a) of the message receiver, to select a message format which the terminal of the message receiver can receive, based on the terminal information corresponding to the read terminal type information (15c) of the message receiver, and to create a message in compliance with the selected message format.

6. The portable cellular phone (10) system according to Claim 5, wherein said terminal information server (20) manages the terminal information indicating whether or not each type of terminal can receive not only a message of an SMS (Small Message Service) format, but also a message of an MMS (Multimedia Message Service) format, for each terminal type and sends out the terminal information to said communication line, and
wherein said portable cellular phone (10) is so configured to store the name (15a) of the message receiver, and at least one of the telephone number and the E-mail address (15b), and the terminal type information (15c) corresponding to the name (15a) of the message receiver, to receive the terminal information from said terminal information server (20) via said communication line, and to store the received terminal information, and when a message for transmission to the message receiver is created, to read the terminal type information (15c) corresponding to the name (15a) of the message receiver, to select the SMS format or the MMS format which the terminal of the message receiver can receive, based on the terminal information corresponding to the read terminal type information (15c) of the message receiver, and to create a message in compliance with the selected message format.

7. The portable cellular phone (10) system according to Claim 5 or 6,
wherein said terminal information server (20) is so configured as to periodically send out the terminal information to said communication line and wherein said portable cellular phone (10) is so configured as to receive the terminal information from said terminal information server (20) via said communication line and to store the received information and to periodically update the received information.

8. The portable cellular phone (10) system according to Claim 7, wherein said portable cellular phone (10) comprises:
a telephone directory data storing unit (15) to store the name (15a) of the message receiver, and at least one of the telephone number or the E-mail address (15b) of the terminal of the message receiver and the terminal type information (15c) corresponding to the name (15a) of the message receiver;
a terminal information storing unit (16) which stores the terminal information fed from said terminal information server (20) and periodically updates the terminal information; and
a message creating unit (12, 13a, 13b) to obtain, when the message for transmission is created, the terminal type information (15c) corresponding to the name (15a) of the message receiver from said telephone directory data storing unit (15) and the terminal information corresponding to the obtained terminal type information (15c) from said terminal information storing unit (16), to select the message format which the terminal of the message receiver can receive, based on the obtained terminal information, and to create a message in compliance with the selected message format.

9. A message format controlling method **characterized by** comprising:
a step of making a terminal information server (20), on a communication line, manage terminal information indicating a message format which each type of terminal can receive, out of a plurality of message formats, for each terminal type, and send out the terminal information to said communication line; and
a step of making a portable cellular phone (10) store a name (15a) of a message receiver, and at least one of a telephone number and an E-mail address (15b) , and terminal type information (15c) corresponding to the name (15a) of the message receiver, receive the terminal information from said terminal information server (20) via said communication line, and store the received terminal information, and when a message for transmission to the message receiver is created, read the terminal type information (15c) corresponding to the name (15a) of the message receiver, select a message format which the terminal of the message receiver can receive, based on the terminal information corresponding to the read terminal type information (15c) of the message receiver, and create a message in compliance with the selected message format.

10. The message format controlling method according to Claim 9, **characterized by** further comprising:
a step of making a terminal information server (20), on a communication line, manage the terminal information indicating whether or not each type of terminal can receive not only a message of an SMS (Small Message Service) format, but also a message of an MMS (Multimedia Message Service) format, for each terminal type and sends out the terminal information to said communication line, and
a step of making a portable cellular phone (10) store the name (15a) of the message receiver, and at least one of the telephone number and the E-mail address (15b), and the terminal type information (15c) corresponding to the name (15a) of the message receiver, receive the terminal information from said terminal information server (20) via said communication line, and store the received terminal information, and when a message for transmission to the message receiver is created, read the terminal type information (15c) corresponding to the name (15a) of the message receiver, select the SMS format or the MMS format which the terminal of the message receiver can receive, based on the terminal information corresponding to the read terminal type information (15c) of the message receiver, and create a message in compliance with the selected message format.

11. The message format controlling method according to Claim 9 or 10,
**characterized by** further comprising:
a step of making said terminal information server (20) send out periodically the terminal information to said communication line; and
a step of making said portable cellular phone (10) receive the terminal information from said terminal information server (20) via said communication line and store the received information and periodically update the received information.

12. The message format controlling method according to Claim 11, **characterized by** further comprising:
a step of making said portable cellular phone (10) perform telephone directory data storing processing in which the name (15a) of the message receiver, and at least one of the telephone number or the E-mail address (15b) of the terminal of the message receiver and the terminal type information (15c) corresponding to the name (15a) of the message receiver are stored;
a step of making said portable cellular phone (10) perform terminal information processing in which the terminal information fed from said terminal information server (20) is stored and periodically updated;
a step of making said portable cellular phone (10) perform message selecting processing in which, when the message for transmission is created, the terminal type information (15c) corresponding to the name (15a) of the message receiver is obtained from said telephone directory data storing unit (15), and the terminal information corresponding to the obtained terminal type information (15c) is obtained from said terminal information storing unit (16), and the message format which the terminal of the message receiver can receive, is selected based on the obtained terminal information; and
a step of making said portable cellular phone (10) perform message creating processing in which the message is created based on a result from said selecting processing.

13. A message format controlling program **characterized** so to make a computer in a portable cellular phone (10), in particular for a system, as set forth in any one of Claims 5 to 8, implement processing to store a name (15a) of a message receiver, and at least one of a telephone number and an E-mail address (15b), and terminal type information (15c) corresponding to the name (15a) of the message receiver, to receive the terminal information from said terminal information server (20) via said communication line, and processing to store the received terminal information, and when a message for transmission to the message receiver is created, processing to read the terminal type information (15c) corresponding to the name (15a) of the message receiver, processing to select a message format which the terminal of the message receiver can receive, based on the terminal information corresponding to the read terminal type information (15c) of the message receiver, and processing to create a message in compliance with the selected message format.
